Europäisches Patentamt

European Patent Office

Office européen des brevets

(19)

(11) **EP 1 599 052 A2**

(12) # EUROPEAN PATENT APPLICATION

(43) Date of publication:
**23.11.2005 Bulletin 2005/47**

(51) Int Cl.⁷: **H04N 9/73**

(21) Application number: **05252988.0**

(22) Date of filing: **16.05.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **20.05.2004 JP 2004150165**

(71) Applicant: **SONY CORPORATION**
**Tokyo 141 (JP)**

(72) Inventor: **Une, Hideho,**
**Intellectual Property Department**
**Shinagawa-ku, Tokyo 141 (JP)**

(74) Representative: **Mills, Julia**
**D Young & Co**
**120 Holborn**
**London EC1N 2DY (GB)**

(54) **Imaging device, image processing method, and color area setting program**

(57)     The present invention provides an imaging device for picking up an image with a solid-state image pickup device including: a white balance adjusting block configured to subject an image signal obtained by imaging to white balance adjustment; a white balance adjustment control block configured to control an adjusting operation of the white balance adjusting block based on a result of determination concerning a type of light source for imaging; an image data processing block configured to subject, of the image signal corrected by the white balance adjusting block, signal components for a specified color area to an image signal processing; and a color area setting block configured to set a color area as an object for image data processing by the image data processing block according to an instruction from the outside. The white balance setting block has a function to change a white color point as a reference for white balance adjustment based on a result of determination concerning the light source for imaging. The color area setting block changes and sets a color area corresponding to an instruction from the outside in response to a change of the white color point by the white balance control block.

FIG.2

EP 1 599 052 A2

**Description**

The present invention relates to the field of imaging devices for picking up an image using a solid-state image pickup device, image processing methods and color area setting programs for this imaging device. Embodiments of the present invention relate specifically to an imaging device having a white balance adjusting function and an image processing function for processing signal components for a specific color area, an image processing method and a color area setting program.

Recently, digital cameras, digital video cameras and other imaging devices each with a solid-state image pickup device have rapidly become popular. Such imaging devices execute various kinds of digital signal processing for correcting image quality of digital image signals obtained from imaging.

A typical image quality correcting function includes a white balance adjusting function. The white balance adjustment is used to adjust hue so that white color is correctly displayed corresponding to the color temperature of a lights source for an object; and further there are many imaging devices each equipped with an auto white balance function for detecting the color temperature of a light source and automatically detecting hue, using image signals and outside detectors. In the auto white balance, each signal of R, G, B in an imaging signal is generally subjected to a gain so that R=G=B occurs at a white color point as a reference in the picked-up image.

In some cases, the auto white balance function may not always display correct colors. For example, it is difficult to provide an atmosphere of an object, because the red hue is suppressed, for instance, in the twilight. Therefore, some of the recent imaging devices are equipped with a function for intentionally moving a white color point as a reference for white balance adjustment, using set values corresponding to such light source types as sunlight, an incandescent lamp and a fluorescent light, or corresponding to color components in a certain area specified at user's discretion during imaging.

There is another image quality correcting function with a correcting function for edge enhancement in a specified color area. For example, when an image of a flesh color part is subjected to correction processing for edge enhancement so that the natural and clear outline is especially expressed, human skin color may be picked up clearly by lessening edge enhancement in the flesh color part itself. Therefore, for example, using I signal and Q signal generated from image signals to determine a flesh color part in an picked-up image depending on whether or not a specified area of I axis - Q axis plane includes a hue of an input image signal, an outline correction signal level for the area is suppressed to a lower level than those of the other areas. Further, there is an edge correction unit enabling more proper edge enhancement by dividing the flesh color area on the I axis - Q axis plane into a plurality of areas, and by subjecting the flesh color part of the image to coring processing with an amount of coring set step by step in each of these areas (Refer to, for example, Japanese Patent No. 3264107 (paragraph number [0020] to [0033], Fig. 1)).

In an imaging device equipped with the auto white balance function and the correcting function for a specified color area, both of which are image quality correcting functions, when a light source changes, color signals of the entire image are corrected by the auto white balance function; and therefore, there is a case where a color area specified by the color correcting function is moved out of an intended area, and in that case there is a need to specify a color area once again. For example, in a case where edge enhancement is lessened only in the flesh color area of a picked-up image, when a light source changes and the color components included in the light source also change, after specifying a flesh color area under a certain light source, the color components of reflection from the flesh color part are also changed by the auto white balance function, and therefore in some cases the flesh color is not selected in the specified color area.

In order to avoid such instances, there may be employed a method in which a specified color area is automatically changed in response to a control value (gain value) of auto white balance for correcting a change in color components of a light source. As described above, however, when a white color point as a reference is intentionally moved out of the setting value of auto white balance, a color area selected before and after the white color point is moved changes; and therefore there is the problem that an intended color area is not selected, thus an appropriate image quality correction effect being not obtained.

The present invention is made in view of the circumstances as described above. Embodiments of the present invention seek to provide an imaging device which makes it possible to specify a color area properly to be subjected to correction, even when image signals have been subjected to white balance adjustment, by intentionally moving the white color point.

Embodiments of the present invention also seek to provide an image data processing method in an imaging device which makes it possible to specify a color area properly to be subjected to correction, even when image signals have been subjected to white balance adjustment, by intentionally moving the white color point.

Other embodiments of the present invention seek to provide a color area setting program which makes it possible to specify a color area properly to be subjected to correction, even when image signals have been subjected to white balance adjustment, by intentionally moving the white color point.

To solve or at least alleviate the problems associated with the conventional methods and apparatuses as described above, various respective aspects of the present invention provide an imaging device, an image processing method and color area setting program as set out in the appended claims.

An embodiment of the present invention provides an imaging device for picking up an image with a solid-state image pick up device comprising: a white balance adjusting block configured to subject an image signal obtained by imaging to white balance adjustment; a white balance adjustment control block configured to control an adjusting operation of the white balance adjusting block based on a result of determination concerning a type of a light source for imaging; an image processing block configured to subject, of the image signals corrected by the white balance adjusting block, signal components for a specific color area to an image data processing; and a color area setting block configured to set a color area as an object for image data processing by the image data processing block according to an instruction from the outside; wherein the white balance adjustment control block has a function to change a white color point as a reference for the white balance adjustment based on a result of determination concerning the light source for imaging; and the color area setting block changes and sets the color area corresponding to an instruction from the outside in response to a change of the white color point by the white balance adjustment control block.

With the imaging device as described above, when a white color point based on a result of determination concerning a type of a light source is intentionally changed by the white balance adjusting block, the color area setting block changes the color area corresponding to an instruction from the outside in response to a change of the white color point and sets the color area as an object for the image data processing by the image processing block. Thus, the image processing block sets, regardless of a change of the white color point, a color area which has been specified from the outside by the color area setting block to be subjected to the image data processing.

An embodiment of the present invention provides an image data processing method employed in an imaging device having a white balance adjusting function for an image signal obtained by imaging with a solid-state image pickup device and an image data processing function for signal components for a specified color area in the image signal subjected to white balance adjustment. The method includes the steps of controlling the white balance adjusting function by changing a white color point as a reference for white balance adjustment based on a result of determination concerning a type of light source for imaging in response to an input from the outside and using a control value corresponding to change of the white color point; and changing a color area specified from the outside in response to a change of the white color point and setting the color area as an object for processing the image data processing function.

With the image data processing method as described above, when a white color point based on a result of determination concerning a type of a light source is intentionally changed and adjusted by the white balance adjusting function, the color area corresponding to an instruction from the outside is changed in response to a change of the white color point, and the color area is set as an object for the image data processing by the image processing function. Thus, regardless of a change of the white color point, the color area specified from the outside can be subjected to the image data processing.

With an embodiment of the present invention, when a white color point based on a result of determination concerning a type of a light source is intentionally changed and subjected to the white balance adjustment, the color area corresponding to an instruction from the outside is properly set regardless of a change in the white color point, and the signal components of the color area are subjected to the image data processing; therefore it is possible to obtain an image processing effect intended by a user for certain, without conducting unnecessary operations such as resetting of a color area.

The invention will now be described by way of example with reference to the accompanying drawings, throughout which like parts are referred to by like references, and in which:

Fig. 1 is a block diagram illustrating an overall structure of a digital still camera according to an embodiment of the present invention;
Fig. 2 is a functional block diagram for implementing the white balance adjusting process and the image quality correction process for a specific color area;
Fig. 3 is a chart illustrating the color area selected when the white color point is not shifted;
Fig. 4 is a chart illustrating the color area to be selected when the white color point is shifted; and
Fig. 5 is a flow chart illustrating the color area setting process at the color area setting unit.

Embodiments of the present invention are described below in details with reference to the drawings by referring to examples of embodiments of the present invention applied to a digital camera.

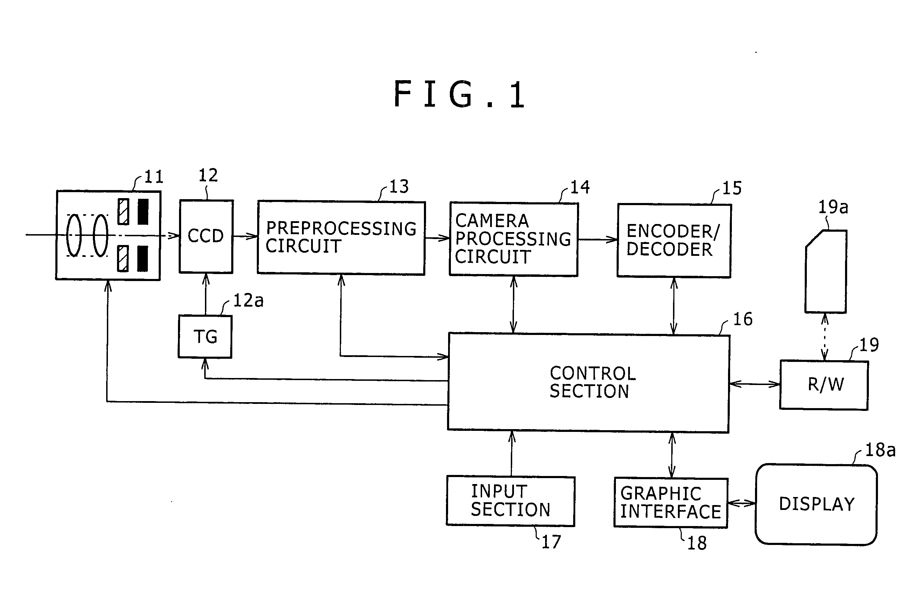

Fig. 1 is a block diagram showing the whole structure of a digital still camera according to the embodiment of the present invention.

The digital still camera shown in Fig. 1 is equipped with an optical block 11, a CCD 12, a timing generator (TG) 12a, a preprocessing unit 13, a camera processing unit 14, an encoder/decoder 15, a control section 16, an input section 17, a graphical interface (I/F) 18, a display 18a, a reader/writer (R/W) 19 and a memory card 19a. Among these, the optical block 11, the timing generator 12a, preprocessing unit 13, camera processing unit 14, encoder/decoder 15, input section 17, graphical interface 18 and reader/writer 19 are connected to the control section 16.

The optical block 11 is equipped with a lens for condensing the light from an object to the CCD 12, a drive structure for implementing focusing or zooming by moving a lens, a shutter structure, an iris structure and the like; and the components are driven according to control signals from the control section 16.

The CCD 12 is driven according to a timing signal generated from the timing generator 12a, and converts the incident radiation from an object to an electrical signal. Another solid-state image pickup device like a CMOS (Complementary Metal Oxide Semiconductor) image sensor may be used instead of the CCD 12. The timing generator 12a outputs a timing signal under the control of the control section 16.

The preprocessing unit 13 subjects an image signal from the CCD 12 to sample hold in order to keep good S/N (Signal/Noise) ratio by CDS (Correlated Double Sampling) processing, controlling a gain by AGC (Auto Gain Control), and outputs a digital image signal by conducting A/D conversion.

The camera processing unit 14 subjects an image signal from the preprocessing unit 13 to such camera signal processing as white balance adjusting processing, color correction processing, AF (Auto Focus) processing, AE (Auto Exposure) processing which are to be described hereinafter.

The encoder/decoder 15 conducts processing for code compression on an image signal from the camera processing unit 14 using a prescribed static image data format such as JPEG (Joint Photographic Coding Experts Group) method. The encoder/decoder 15 also subjects coded data provided from the control section 16 to processing for extension decoding.

In an embodiment of the present invention, the control section 16 is a microcontroller including a central processing unit (CPU), read only memories (ROMs), random access memories (RAMs), among others, and comprehensively controls each part of the digital still camera by executing computer programs stored on the ROMs or other memory devices.

The input section 17 has various keys, levers, dials and others including a shutter release button, and outputs control signals to the control section 16 in accordance to a user's input operations.

The graphical interface 18 generates an image signal for display on the display 18a from an image signal supplied from the control section 16, and supplies the generated image signal to the display 18a. In an embodiment, the display 18a includes a liquid crystal display (LCD), and displays an image being picked up and sent from the CCD 12, or an image regenerated from data stored on the memory card 19a.

To the reader/writer 19 is removably connected to the memory card 19a including a portable flash memory as a recording medium for storing image data, among others, generated through the image pick-up. The reader/writer 19 writes data supplied from the control section 16 to the memory card 19a, and also sends data read from the memory card 19a to the control section 16. In other embodiments, such recordable media as an optical disk or a hard disk drive may be used as the recording medium.

Basic functions of the digital still camera according to the embodiment of the present invention as described above will be described hereinafter. The basic functions for picking up a still image are described first.

Prior to picking up a still image, an image is picked up by the CCD 12 and is converted to an electrical signal also by the CCD 12, and the converted signal is supplied to the preprocessing unit 13. The preprocessing unit 13 subjects the supplied signal to a CDS process and an AGC process, and then converts the signal to a digital signal. The camera processing unit 14 subjects the digital signal supplied from the preprocessing unit 13 to image correction processes, and supplies the processed signal to the graphical interface 18 via the control section 16 as an image being picked up. With this operation, the image being picked up is displayed on the display 18a, and the user can adjust the camera angle, viewing the image on the display 18a.

At this stage, when the release shutter button on the input section 17 is pressed, the control section 16 sends control signals to the optical block 11 and the timing generator 12a, and the shutter in the optical block 11 is released. With this operation, an image signal for a single frame is outputted from the CCD 12.

The camera processing unit 14 subjects image quality correction processes to the image signal for a single frame supplied from the CCD 12 via the preprocessing unit 13, and supplies the processed image signal to the encoder/decoder 15. The encoder/decoder 15 generates compressed code from the supplied image signal, and supplies the compressed data to the reader/writer 19 via the control section 16. With this flow, a data file for the picked-up sill image is stored on the memory card 19a.

For reproducing a still image stored on the memory card 19a as a data file, the control section 16 reads out, in response to input operations on the input section 17, the selected data file from the memory card 19a via the reader/writer 19, and sends the data to the encoder/decoder 15 for decoding. The decoded image signal is supplied to the graphical interface 18 via the control section 16, and the still image is displayed on the display 18a.

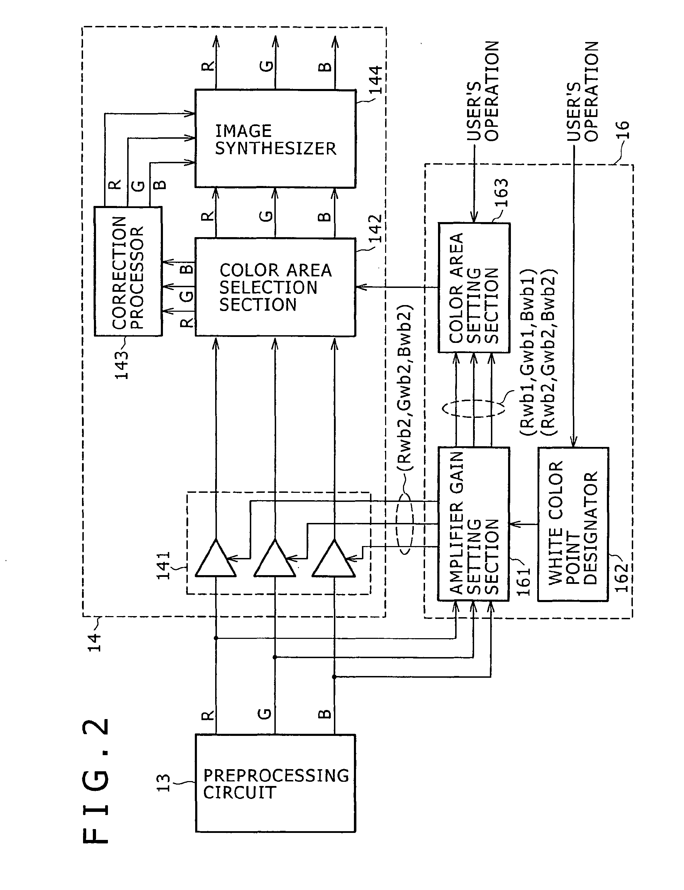

The white balance adjustment process and image quality correction processes at the camera processing unit 14 are described hereinafter. Fig. 2 is a functional block diagram illustrating implementation of the processes.

In the digital still camera according to an embodiment of the present invention, as is shown in Fig. 2, the camera processing unit 14 has a white balance amplifier 141, a color area selector 142, a correction processor 143 and an image synthesizer 144. Further, the control section 16 has an amplifier gain setting unit 161, a white color point designator 162 and a color area setting unit 163, and these are realized, for instance, with the software stored in the control section 16.

RGB signals digitized by the preprocessing unit 13 are inputted to the white balance amplifier 141 and the amplifier gain setting unit 161. The white balance amplifier 141 is a gain control amplifier for adjusting the white balance, and a gain thereof is configured with a control signal sent from the amplifier gain setting unit 161.

The amplifier gain setting unit 161 detects a signal component from the image signal sent from the preprocessing unit 13 for controlling the white balance, determines a type of a light source for imaging based on the detected signal component, and computes control values for the amplifier gains based on the a result of determination concerning the type of the light source (automatic white balance processing). For instance, the amplifier gain setting unit extracts a white portion of a picked-up image from image supplied data and calculates amplifier gain values, making each of RGB components of the signal corresponding to the white portion equal to each other.

Determination of the type of the light source for imaging may be performed based on a wave signal from a wave detector attached externally to the optical block 11 exclusively for the purpose of determining the type of the light source for imaging. Further the determination may be performed is based on a combination of the two methods. Further, the image signal for wave detection may be a color-difference signal, or I- and Q-signals, in place of RGB components.

The amplifier gain setting unit 161 also has a function of moving a white color point for use as a correction reference in the automatic white balance processing, based on an instruction from the white color point designator 162. The white color point as used herein indicates a signal component corresponding to the white portion extracted from the picture as a correction reference at the time of the automatic white balance processing. The white color point designator 162 sends an instruction to the amplifier gain setting unit 161 for moving the white color point intentionally in the automatic white balance processing in response to operations by the user.

For instance, the white color point designator 162 has built-in data in, for instance, a ROM, the data being shift values for the amplifier gains in accordance with the types of the light source for imaging such as sunlight, a incandescent lamp and a fluorescent light, and types of objects being imaged, and outputs to the amplifier gain setting unit 161 shift values of the amplifier gains corresponding to a mode selected by the user through the input section 17. In another embodiment, any shift values for the amplifier gains may be sent to the amplifier gain setting unit 161, in response to operations by the user.

The amplifier gain setting unit 161 adds shift values sent form the white color point designator 162 to the amplifier gain values computed based on the automatic white balance processing, and outputs the added amplifier gain values to the white balance amplifier 141. The white balance amplifier 141 controls gains of each of the RGB signal components in accordance with the sent values, and the white balance already adjusted automatically may further be fine-tuned in response to the user's operation.

The amplifier gain setting unit 161 also outputs to the color area setting unit 163 both the amplifier gain values based on the automatic white balance processing and the amplifier gain values adjusted for the white color point change based on the instruction from the white color point designator 162.

The color area selector 142, the correction processor 143, the image synthesizer 144 and the color area setting unit 163 make up an image quality correction block for a specific color area. The color area selector 142 selects, from the image signals subjected to the white balance adjustment by the white balance amplifier 141, signals for image elements falling within a color area designated by the color area setting unit 163, and outputs a result to the correction processor 143.

The correction processor 143 executes predetermined color correction operations, such as edge enhancement, to the extracted image elements. The image synthesizer 144 synthesizes the image signals outputted from the color area selector 142 and the correction processor 143, respectively, into a color-corrected image signal.

The color area setting unit 163 sets to the color area selector 142 control values corresponding to color areas designated by the user through the input section 17. In an embodiment, control values for specific color areas, such as skin color area, for various color correction modes, may be stored in a ROM in advance, and the color area setting unit 163 reads control values from the ROM corresponding to a mode selected by the user and sends the values to the color area selector 142. In an alternative embodiment, any color area may be selected in accordance to the user's operation.

The color area setting unit 163 modulates the designated color area in accordance to the white color point designated by the white color point designator 162, and make setting for the color area selector 142 accordingly. With this operation, the color area intended by the user is designated and corrected properly, regardless of a change in the white color point based on the automatic white balance processing.

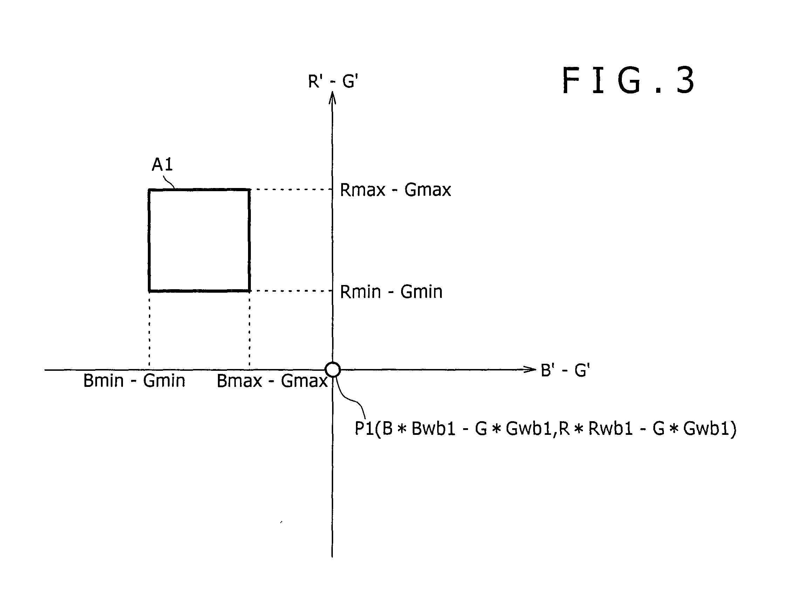

White the balance processing and image quality correction processing are explained hereinafter with a BG and RG plane as an example. Fig. 3 is a diagram indicating a color area selected when the white color point is not moved.

In the following description, it is assumed that the amplifier gain values are Rwb1, Gwb1 and Bwb1, computed through the white balance processing of the amplifier gain setting unit 161 and corresponding to each of the RGB signal components. As a result of the automatic white balance processing to the image signals (R', G,' B') outputted from the preprocess unit 13, the amplifier gains are set so that R=G=B is true at the white color point of the image. The coordinate of a white color point P1 on the BG and RG plane is (B'·Bwb1-G·Gwb1, R'·Rwb1- G'·Gwb1)=(0, 0). Further the (B-G, R-G) plane is expressed by image signals computed through the automatic white balance processing in the amplifier gain setting section 161 and having been subjected to gain adjustment according to the amplifier gain values Rwb1, Gwb1, Bwb1 for the RGB signal components respectively.

In this state, it is assumed that a color area A1 is selected by the color area setting unit 163 where (Rmax-Gmax) > (R-G) > (Rmin-Gmin) and (Bmax-Gmax) > (B-G) > (Bmin-Gmin) are both true.

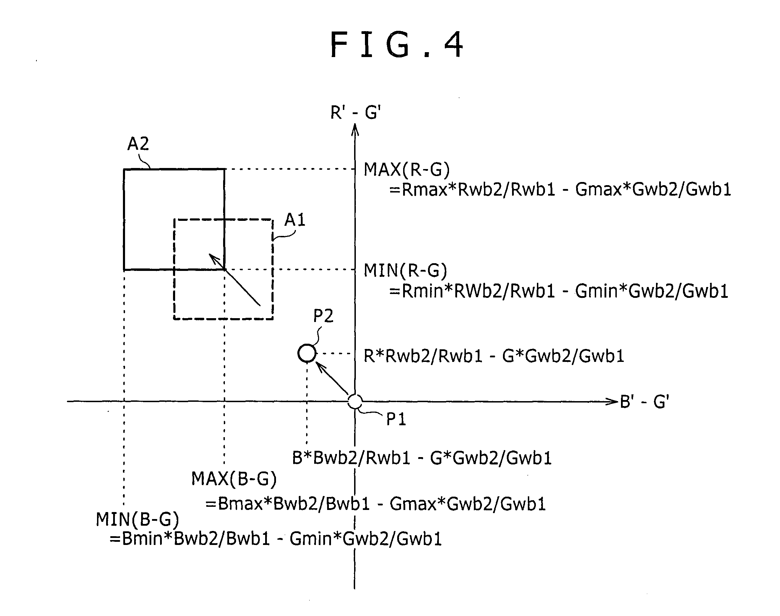

Fig. 4 is a diagram showing a color area selected when the white color point is moved.

In the state shown in Fig. 3, upon receiving an instruction from the white color point designator 162 for moving the white color point P1, the amplifier gain setting unit 161 computes an amplifier gains according to a size of the shift and controls the white balance amplifier 141 accordingly. Because of this functionality, an image with a different hue is generated, and for selecting an intended color area correctly, the color area needs to be shifted in accordance to the size of the shift of the white color point P1.

Assuming that the amplifier gain values, when the white color point is move, are Rwb2, Gwb2, and Bwb2, and coordinate values of the white color point P2 is (B·Bwb2/Bwb1-G·Gwb2/Gwb1, R·Rwb2/Rwb1-G·Gwb2/Gwb1). Hence, the color area A2 to be selected by the color area selector 163 after the white color point is shifted is expressed as MAX(R-G) > (R-G) > MIN(R-G) and MAX(B-G) > (B-G) > MIN(B-G), where the maximum and minimum values along the R-G axis are MAX(R-G) and MIN(R-G) respectively, and maximum and minimum values along the B-G axis are MAX(B-G), MIN(B-G) respectively. MAX(R-G), MIN(R-G), MAX(B-G) and MIN(B-G) may be obtained from formulae (1) through (4) listed hereinafter:

$$MAX(R-G) = Rmax·Rwb2/Rwb1-Gmax·Gwb2/Gwb1 \qquad (1)$$

$$MIN(R-G) = Rmin·Rwb2/Rwb1-Gmin·Gwb2/Gwb1 \qquad (2)$$

$$MAX(B-G) = Bmax·Bwb2/Bwb1-Gmax·Gwb2/Gwb1 \qquad (3)$$

$$MIN(B-G) = Bmin·Bwb2/Bwb1-Gmin·Gwb2/Gwb1 \qquad (4)$$

By setting the color area A2 as described above, it is possible to select the same signal components as the color area A1 before moving the white color point.

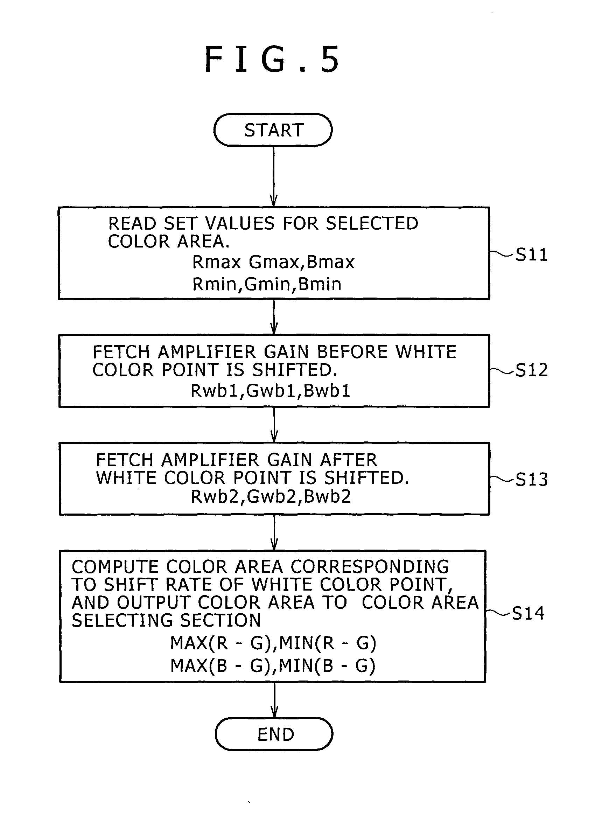

Fig. 5 is a flow chart showing a process flow of setting color area at the color area setting unit 163.

The following process is executed each time an image signal corresponding to a frame of an image is outputted from the preprocessing unit 13. The amplifier gain setting unit 161, upon receipt of an image signal corresponding to a frame of an image, outputs to the color area setting unit 163 both the amplifier gains Rwb1, Gwb1 and Bwb1 based on the automatic white balance processing and the amplifier gains Rwb2, Gwb2 and Bwb2 having been shifted based on the instruction from the white color point designator 162.

[Step S11] Set values (Rmax, Gmax, Bmax, Rmin, Gmin, Bmin) for a color area selected in response to the user's operation are read out, for instance, from a ROM. The values may be set freely by the user.
[Step S12] Amplifier gain values (Rwb1, Gwb1, Bwb1) based on the automatic white balance process, namely the values before the white color point is shifted in accordance with an instruction from the white color point designator 162 are fetched from the amplifier gain setting unit 161.
[Step S13] Amplifier gain values (Rwb2, Gwb2, Bwb2) after the white color point is shifted in accordance with an instruction from the white color point designator 162 are fetched from the amplifier gain setting unit 161. [Step S14] A color area to be selected is set by computing the color area values in accordance with the shift rate of the white color point using the formulae (1) through (4) hereinabove and outputting the computed values to the color area selector 142.

In the event the white color point is not designated to be shifted by the white color point designator 162, then formulae Rwb2 = Rwb1, Gwb2 = Gwb1, and Bwb2 = Bwb1 are all true, and the solution of the formulae (1) through (4) hereinabove is that formulae MAX(R-G) = Rmax-Gmax, MIN(R-G) = Rmin-Gmin, MAX(B-G) = Bmax-Gmax, and MIN(B-G) = Bmin-Gmin are all true, meaning the values remain unchanged from those read in at the step S11.

With the steps described hereinabove, the color area to be selected is automatically modulated in accordance with a shift rate of the white color point even when the white balance processing is performed in a manner so that the white color point is intentionally shifted, and therefore the user's intended color area is always selected accurately, and the selected color area is subjected to the color correction process in the correction processor 143. Accordingly the user is not required to reset the color area to be subjected to the color correction process every time the white color point setting is adjusted, free from bothersome operations, thus a failure in imaging due to forgotten resetting being prevented.

In addition, a specific example of the image quality correction processes to specific color areas is described below. The present invention may be applied to the image correction processes as described below.

* For a specific color area, like a color area representing human skin, values for edge enhancement correction process are set differently from other color areas. For instance, the color area representing the human skin may be subjected to a weaker edge enhancement correction process while other color areas are subjected to an edge enhancement correction process sharpening the outline. For this purpose, an edge enhancement correction process unit is provided between the color area selector 142 and the image synthesizer 144, and image element signals extracted by the color area selector 142 is processed by the correction processor 143 with weaker set values for edge enhancement.

* The color correction process is applied to a specific color area, or to all color areas except for a specific color area. As an example, a color area representing human skin only may be subjected to a color correction process for the purpose of obtaining a desirable color, while other areas are not subjected to the color correction process in order to avoid unnatural colors.

* A brightness correction process is applied to a specific color area, or to all color areas except for a specific color area. As an example, a color area representing human skin only may be subjected to a brightness correction process for the purpose of obtaining a desirable color, while other areas are not subjected to the brightness correction process in order to avoid unnatural colors.

* The present invention may be applied to special effect processes as explained hereinafter, and various other image processes.

* A specific color in the image, or all colors except for a specific color, may be replaced with another color. The image may be made monotone except for a specific color, or color green of leaves may be replaced with color red to realize visual effects of autumn leaves.

* A part of an image with a specific color, or a part of an image with colors other than a specific color may be substituted with another image.

* A specific color, or all colors except a specific color, in an image may be subjected to brightness level changes.

By applying embodiments of the present invention, color correction processes and special effect processes as explained above may be made free or at least nearly free of effects of white color point settings in the white balance adjustment, and color areas may be selected properly as intended.

In the embodiments of the present invention described above, the present application is applied to a digital still camera, but the present invention may also be applied to other imaging devices each with a solid-state image pickup device. The present invention may be applied, for instance, to a digital video camera, and imaging devices built in a cellular phone, personal digital assistants and others. The present invention may also be applied to processing image signals in a videophone connectable to a personal computer and others, and in a small camera for use with game software.

The processing functions of the imaging devices as described hereinabove may be implemented with a computer. In this case, the functional capabilities that the image-picking device should have, in particular those of the amplifier gain setting unit 161 and the color area setting unit 163, are offered as computer programs describing the processing steps. The computer programs are executed with a computer, and the functions as described above are realized on the computer. The computer programs describing the processing steps may be stored on a computer-readable recording medium. Such computer-readable recording media include a magnetic recording system, an optical disk, a magneto-optical disk and a semiconductor memory.

For the purpose of distributing the computer programs, a portable recording media, with the computer programs recorded thereupon, may be sold, the portable recording media including an optical disk and a semiconductor memory. Alternatively, the computer programs may be stored on a memory device of a server computer, and the computer programs may then be distributed to other computers via a network.

In an embodiment, the computer executing the computer programs first stores the computer programs, stored on the portable recording medium or transferred from the server computer, on a memory device internal to the computer. The computer then reads the computer programs from the internal memory device and executes the processing steps as described on the computer programs.

In another embodiment, the computer may read the computer programs directly from the portable recording medium and then executes the processing steps as described on the computer programs. Yet in another embodiment, the computer may execute the computer programs in blocks, each time a block of the computer programs is transferred from the server computer.

While preferred embodiments of the invention have been described using specific terms, such description is for illustrative purposes only, and it is to be understood that changes and variation may be made without departing from the scope of the following claims.

Further particular and preferred aspects of the present invention are set out in the accompanying independent and dependent claims. Features of the dependent claims may be combined with features of the independent claims as appropriate, and in combinations other than those explicitly set out in the claims.

**Claims**

1. An imaging device for picking up an image with a solid-state image pickup device comprising:

   a white balance adjusting block configured to subject an image signal obtained by imaging to white balance adjustment;
   a white balance adjustment control block configured to control an adjusting operation of said white balance adjusting block based on a result of determination concerning a type of light source for imaging;
   an image data processing block configured to subject, of the image signal corrected by the white balance adjusting block, signal components for a specified color area to an image signal processing; and
   a color area setting block configured to set a color area as an object for image data processing by said image data processing block according to an instruction from the outside;

   wherein said white balance setting block has a function to change a white color point as a reference for white balance adjustment based on a result of determination concerning said light source for imaging; and
   said color area setting block changes and sets a color area corresponding to an instruction from the outside in response to a change of said white color point by said white balance control block.

2. The imaging device according to claim 1,
   wherein said white balance adjustment control block controls said white balance adjusting block by outputting a first amplifier gain for white balance adjustment based on a result of a type of said light source for imaging and a second amplifier gain corresponding the change of said white color point and using said second amplifier gain; and
   said color area setting block modulates a maximum value and a minimum value of signal components indicating a color area corresponding to a specification from the outside based on said first and second amplifier gains.

3. The imaging device according to claim 2,
   wherein said color area setting block changes a color area by multiplying the maximum value and minimum value of said signal components by said second amplifier gain and also dividing the maximum value and minimum value by said first amplifier gain every time the image signal by imaging is supplied to said white balance adjusting block.

4. A method of imaging data processing in an imaging device having a white balance adjusting function for an image signal obtained by imaging with a solid-state image pickup device and an image data processing function for signal components for a specified color area in the image signal subjected to the white balance adjustment, said method comprising the steps of:

   controlling said white balance adjusting function by changing a white color point as a reference for white balance adjustment based on a result of determination concerning a type of light source for imaging in response to an input from the outside and using a control value corresponding to change of the white color point; and
   changing a color area specified from the outside in response to a change of said white color point and setting said color area as an object for processing by said image data processing function.

5. A color area setting program for making a computer execute the processing the color area as an object for said image data processing when an image signal obtained with a solid-state image pickup device is subjected to white balance adjustment and then the signal components for a specified color area in said image signal are subjected to image data processing,

wherein said computer comprises:

a color area specification accepting block configured to accept information specifying a color area in response to an input from the outside; and

a color area modulating block configured to set said color area as an object for said image data processing by changing, when a white color point as a reference for white balance adjustment based on a result of determination concerning a type of a light source is changed in response to an input from the outside, the color area corresponding to said specification information according to the change of said white color point.

6. An imaging device for picking up an image with a solid-state image pickup device comprising:

white balance adjusting means for subjecting an image signal obtained by imaging to white balance adjustment;

white balance adjustment control means for controlling an adjusting operation of said white balance adjusting means based on a result of determination concerning a type of light source for imaging;

image data processing means for subjecting, of the image signal corrected by the white balance adjusting means, signal components for a specified color area to an image signal processing; and

color area setting means for setting a color area as an object for image data processing by said image data processing means according to an instruction from the outside;

wherein said white balance setting means has a function to change a white color point as a reference for white balance adjustment based on a result of determination concerning said light source for imaging; and

said color area setting means changes and sets a color area corresponding to an instruction from the outside in response to a change of said white color point by said white balance control means.

F I G . 1

# F I G . 2

FIG.3

EP 1 599 052 A2

# FIG.4

MAX(R-G)
=Rmax*Rwb2/Rwb1 - Gmax*Gwb2/Gwb1

MIN(R-G)
=Rmin*RWb2/Rwb1 - Gmin*Gwb2/Gwb1

R*Rwb2/Rwb1 - G*Gwb2/Gwb1

B*Bwb2/Rwb1 - G*Gwb2/Gwb1

MAX(B-G)
=Bmax*Bwb2/Bwb1 - Gmax*Gwb2/Gwb1

MIN(B-G)
=Bmin*Bwb2/Bwb1 - Gmin*Gwb2/Gwb1

EP 1 599 052 A2

# F I G . 5

START

READ SET VALUES FOR SELECTED
COLOR AREA.
     Rmax Gmax,Bmax
     Rmin,Gmin,Bmin

S11

FETCH AMPLIFIER GAIN BEFORE WHITE
COLOR POINT IS SHIFTED.
     Rwb1,Gwb1,Bwb1

S12

FETCH AMPLIFIER GAIN AFTER
WHITE COLOR POINT IS SHIFTED.
     Rwb2,Gwb2,Bwb2

S13

COMPUTE COLOR AREA CORRESPONDING
TO SHIFT RATE OF WHITE COLOR POINT,
AND OUTPUT COLOR AREA TO COLOR AREA
SELECTING SECTION
     MAX(R - G),MIN(R - G)
     MAX(B - G),MIN(B - G)

S14

END